# EUROPEAN PATENT APPLICATION

(11) **EP 2 884 404 A2**
(43) Date of publication of application: **17.06.2015**
(21) Application number: 14194647.5
(22) Date of filing: 25.11.2014
(51) Int. Cl.: G06F 17/18, G05B 23/02, F02C 9/00

(54) **System abnormalities**

(30) Priority: 13.12.2013 GB 201322062
(71) Applicant: Rolls-Royce Controls and Data Services Limited, Derby, Derbyshire DE24 8BJ (GB)
(72) Inventor: Proctor, Samuel Neville, Derby, Derbyshire DE24 8BJ (GB)
(74) Representative: Yeomans, Victoria Jane Anora

(57) **Abstract**

A monitor and method to identify an abnormality in a system (10), comprising a sensor (60) to measure a parameter value (84) of the system. A processor (64) to receive parameter values; select a subset to store in a buffer; and calculate a threshold (66) corresponding to normal values of the parameter. An estimator (80) to estimate the next parameter value. A comparator (68) to compare a measured parameter value to the calculated threshold and to store: the measured parameter value in the buffer if the measured parameter value does not exceed the calculated threshold and the estimated parameter value in the buffer if the measured parameter value exceeds the calculated threshold.

## Description

The present invention relates to a monitor and a method to identify an abnormality in a system. It finds particular utility as a system health monitor, such as an engine health monitor.

It is known to monitor a system such as an engine by measuring the value of a parameter over time. Typically such parameter values include a noise component so that normal operation of the system is characterised by a range of values for the parameter. It is advantageous to set limits or thresholds that define the boundaries between normal parameter values and abnormal parameter values which may indicate system abnormalities.

Parameter values typically have an underlying trend in addition to the random noise in each value. For example, the temperature of components or airflows in an engine may increase over time as engine components wear. It is advantageous for the limits or thresholds to track the underlying trend so that parameter values indicating normal but degraded operation are not identified as abnormal. This reduces the occurrence of falsely triggered maintenance activity or other costly actions where none are required.

One known method of identifying abnormalities in a parameter value comprises providing a model of good parameter values from which the limits or thresholds may be derived. For example, a large number of parameter values that are known to be characteristic of a healthy engine may be provided. The mean value and standard deviation of the set of values can be calculated. The limits or thresholds can then be set, for example, as a multiple of the standard deviation from the mean value.

One disadvantage of this method is that it does not take account of the underlying trend of the data.

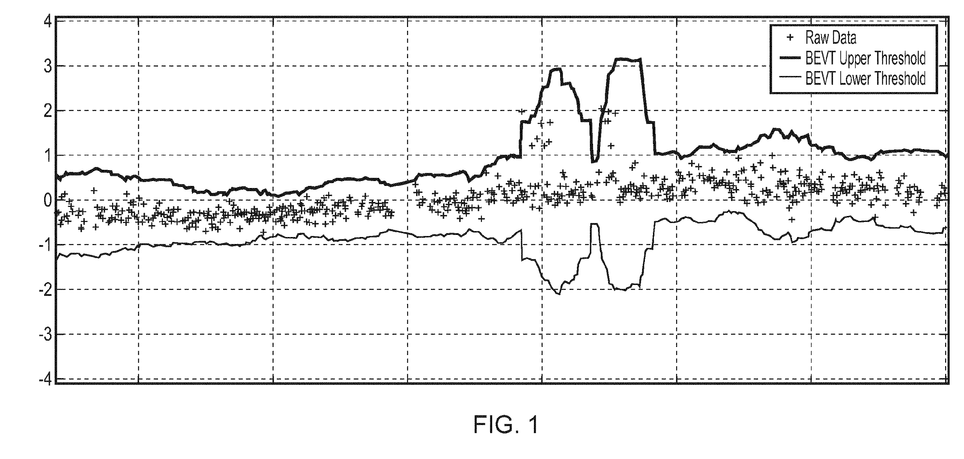

A further conventional method updates the initial mean and standard deviation using a buffer of recent parameter values. Thus the underlying trend of the data may be tracked. This can be seen in Figure 1.

One disadvantage of this method is that any abnormal parameter value is added to the buffer and used to calculate the mean and standard deviation for many subsequent iterations. This has the effect that the thresholds are quick to shift towards the abnormal value and slow to return to approximately the levels before the abnormality was identified. Therefore, if further parameter values of similar magnitude to the identified abnormality occur soon afterwards, they may not be detected as abnormalities.

The present invention provides a monitor and method to identify abnormalities in a system that seeks to address the aforementioned problems.

Accordingly the present invention provides a monitor to identify an abnormality in a system, the monitor comprising:
a) a sensor to measure a parameter value of the system;
b) a buffer store;
c) a processor to receive parameter values from the sensor; select a subset of the parameter values to store in the buffer store; and calculate a threshold corresponding to normal values of the parameter;
d) an estimator to estimate the next parameter value of the system;
e) a comparator to compare a measured parameter value to the calculated threshold and to store the measured parameter value in the buffer store if the measured parameter value does not exceed the calculated threshold and to store the estimated parameter value in the buffer store if the measured parameter value exceeds the calculated threshold; and
f) a recorder to record a parameter abnormality if the measured parameter value exceeds the calculated threshold.

Advantageously the monitor identifies abnormalities of the system to be monitored. It tracks the behaviour of the parameter being measured so that abnormalities do not affect the thresholds but that underlying trends do affect the thresholds. Beneficially the monitor may be a system health monitor.

The processor may calculate the threshold by applying Bayesian extreme value theory to the parameter values stored in the buffer store. Alternatively the processor may calculate the threshold by determining an offset from the system state of the parameter values in the buffer store.

Advantageously the threshold calculated is strongly related to the parameter values in the buffer store.

The estimator may estimate the next parameter value by applying a Kalman filter to the system state at the previous parameter value. Alternatively the estimator may estimate the next parameter value by calculating a running average or by applying a data smoothing technique.

Advantageously the estimate of the next parameter value is based on the parameter values in the buffer store so it is similar to previous values.

The present invention also provides a method to identify an abnormality in a system, the method comprising iterating steps to:
a) periodically measure a parameter of the system to form a data series of parameter values;
b) select a subset of the parameter values from the data series to store in a buffer of parameter values;
c) calculate a threshold corresponding to normal values of the parameter;
d) measure the next value of the parameter;
e) compare the measured parameter value to the calculated threshold and
   i) if the measured parameter value does not exceed the calculated threshold, store the measured parameter value in the buffer for subsequent iterations; or
   ii) if the measured parameter value exceeds the calculated threshold, record as a parameter abnormality, estimate the next parameter value in the data series, and store the estimated parameter value in the buffer for subsequent iterations.

Advantageously the threshold is unchanged by an identified parameter abnormality and subsequent abnormalities of the system are identified.

Step b) may comprise selecting consecutive parameter values from the data series. Alternatively it may comprise selecting non-consecutive parameter values. Step b) may comprise selecting between ten and twenty parameter values from the data series.

Step c) may comprise applying Bayesian extreme value theory to the parameter values in the buffer. Alternatively it may comprise determining an offset from the system state of the parameter values in the buffer.

Advantageously the threshold calculated at step c) is strongly related to the parameter values in the buffer.

Step e)ii) may comprise applying a Kalman filter to the system state at the previous parameter value. Alternatively step e)ii) may comprise calculating a running average or by applying a data smoothing technique to the parameter values in the buffer.

Advantageously the estimate of the next parameter value in the data series is based on the parameter values in the buffer so it is similar to previous values.

The method may comprise a further step to report the parameter abnormality. Advantageously this enables a system user to investigate and take appropriate remedial or preventative action.

The method may comprise a further step to report an abnormality of the system after three parameter abnormalities have been recorded at step e)ii). Alternatively the method may comprise a further step to report an abnormality of the system after two parameter abnormalities have been recorded at step e)ii) or after more than three parameter abnormalities have been recorded at step e)ii). Advantageously this reduces the probability of reporting an abnormality of the system as a result of a single, spurious parameter abnormality. Reporting an abnormality of the system may be in addition to reporting a parameter abnormality.

The Kalman filter may apply a constant multiplier to the system state. Alternatively the Kalman filter may apply a multiplier to the system state that is a function of at least one previous system state. The Kalman filter may comprise a noise component to accommodate random fluctuation in the parameter values.

Advantageously the Kalman filter may be a fixed or dynamic multiplier from the system state based on the parameter values in the buffer.

The parameter may be measured at predetermined time intervals to form a time series of parameter values. Advantageously the parameter may be a system parameter which is measured at a predefined frequency for other purposes or may be a system parameter measured only to identify parameter abnormalities from which an abnormality of the system can be determined.

The system may comprise an engine. The system may comprise a gas turbine engine. The parameter may comprise one of the group comprising a component temperature; air temperature; oil temperature; a pressure; a shaft speed; vibration; clearance between components. Advantageously many or all of these parameters are measured for other reasons and so the monitor and method do not add weight or complexity to such an engine. The abnormality of the system may comprise one or more of the group comprising: overspeed of a rotating part of the engine; underspeed of a rotating part of the engine; system overheat; inadequate power output; failure of a rotating part of the engine. Advantageously such abnormalities of the system should be identified quickly and accurately in order for preventative or mitigation actions to be performed.

The system may comprise a weather system. The parameter may comprise one of the group comprising air temperature; rainfall; wind speed; pressure; air flow. Advantageously abnormalities of such parameters may provide early indications of severe weather events such as storms, flooding, typhoons, hurricanes, and tornados.

Step a) may comprise periodically measuring more than one parameter of the system and the steps of the method are performed for each parameter. The method may comprise a further step to report an abnormality of the system if a parameter abnormality is recorded for each parameter at step e)ii). Advantageously this increases the certainty of a particular abnormality of the system.

The method may comprise a further step to modify the system in response to a recorded parameter abnormality or in response to a reported abnormality in the system. The step of modifying the system may comprise one or more of the group comprising: inspecting a component of the system; testing a component of the system; cleaning a component of the system; performing maintenance actions on a component of the system; repairing a component of the system; replacing a component of the system; inspecting the system; testing the system; cleaning the system; performing maintenance actions on the system; repairing the system; removing the system from service.

The present invention also provides a system health monitor configured to perform the steps of the method as described above; a computer program having instructions adapted to carry out the method as described above; a computer readable medium, having a computer program recorded thereon, wherein the computer program is adapted to make the computer execute the method as described above; a computer program comprising the computer readable medium as described.

Any combination of the optional features is encompassed except where mutually exclusive.

The present invention will be more fully described by way of example with reference to the accompanying drawings, in which:
Figure 1 is a graph of parameter values and calculated thresholds over time according to a prior art method.
Figure 2 is a sectional side view of a gas turbine engine.
Figure 3 is a system diagram of the monitor according to the present invention.
Figure 4 is a flow chart of the method according to the present invention.
Figure 5 and Figure 6 are graphs of parameter values and calculated thresholds over time according to the present invention.

The present invention is initially described in relation to the health of a gas turbine engine 10. Other systems to which the monitor can be applied are described later.

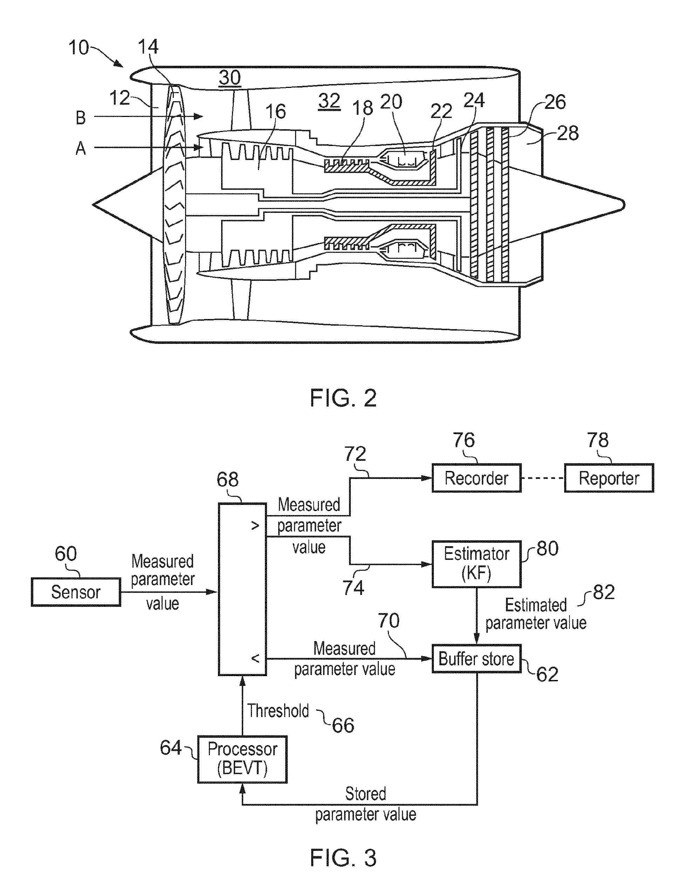

A gas turbine engine 10 is shown in Figure 2 and comprises an air intake 12 and a propulsive fan 14 that generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. The high pressure turbine 22 and high pressure compressor 18 are coupled by a high pressure shaft, the intermediate pressure turbine 24 and intermediate pressure compressor 16 are coupled by an intermediate pressure shaft and the low pressure turbine 26 is coupled to the fan 14 by a low pressure shaft. A nacelle 30 surrounds the gas turbine engine 10 and defines, in axial flow B, a bypass duct 32.

The health of a gas turbine engine 10 is monitored in order to report or predict engine faults and to inform maintenance decisions. Engine health monitoring typically includes monitoring engine parameters to identify an isolated exceedance relative to a threshold, prolonged periods outside predefined limits, rate of change of the parameter greater than a predefined rate, and underlying trends indicating deterioration. More complex relationships between two or more parameters may also be used to indicate changes in the health of an engine.

Typical engine faults, anomalies or abnormalities that may be detected or predicted by engine health monitoring include overspeed or underspeed of a rotational shaft of the engine 10, overheating of one or more components of the engine 10, excessive vibration, pressure fluctuations or asymmetries that may result in surge or stall conditions, increased component clearances which reduce efficiency, and many other conditions that are apparent to the skilled reader.

A plurality of sensors are mounted to various engine components to measure operational parameters such as temperature, velocity, flow rate, rotational speed, torque, distance, stress or deflection within the engine 10 or one or more of its components. Such parameters may be measured at prescribed time increments or at predetermined equipment states during operation and stored for communication to a monitoring unit which may be located on a vehicle, such as an aircraft powered by the gas turbine engine 10, or which may be located remotely.

A significant volume of data may be amassed during operation of the engine 10, which is processed to determine existing or predicted faults. The resulting fault information may be communicated to an organisation, entity or division responsible for supporting, maintaining or designing the equipment such that it can be taken into account within a planning process for equipment maintenance, scheduling, operational planning or equipment improvement by way of design changes or modifications.

Figure 3 schematically illustrates a monitor to identify an abnormality in a system according to the present invention. A sensor 60 is provided to measure a parameter value of the system. For example, where the system is a gas turbine engine 10 the sensor 60 may be a speed sensor to measure the rotational speed of one of the high pressure, intermediate pressure and low pressure shafts. The sensor 60 may alternatively be a temperature sensor arranged to measure a component temperature or the temperature of the airflow through the engine 10 at a specific point in the engine 10, for example in the intermediate pressure compressor 16. The sensor 60 may alternatively be a pressure sensor arranged to measure the pressure of the airflow through the engine 10 at a specific point in the engine 10, for example in the intermediate pressure compressor 16. Any other sensor 60 measuring any other parameter of the engine 10 from which an abnormality of that engine can be derived may be used instead.

The measured parameter values may be stored in memory for real-time control functions and for detailed off-line analysis. A subset of the parameter values measured by the sensor 60 is stored in a buffer store 62. The buffer 62 may be sized to hold, for example, ten to twenty parameter values.

A processor 64 receives the parameter values in the buffer store 62 and uses them to calculate a threshold 66 using Bayesian extreme value theory as will be discussed below. The threshold 66 is supplied to a comparator 68. The current measured parameter value is also supplied to the comparator 68 from the sensor 60 for comparison against the calculated threshold 66.

If the current measured parameter value is less than the calculated threshold 66 the measured parameter value is passed from the comparator 68 along line 70 to the buffer store 62. This measured parameter value is therefore available for the processor 64 to use in calculating the next threshold 66.

If the current measured parameter value is greater than or equal to the calculated threshold 66 the comparator 68 passes the measured parameter value along lines 72 and 74. Line 72 leads to a recorder 76 which records that measured parameter value as a parameter abnormality. Optionally a reporter 78 may be provided to receive the parameter abnormality from the recorder 76 and to report the parameter abnormality to personnel or another system for verification or system modification actions.

Line 74 leads to an estimator 80 which estimates the parameter value on the basis of the parameter values currently in the buffer 62. The estimator 80 applies a Kalman filter to these values to calculate the estimated parameter value 82, which therefore does not exceed the calculated threshold 66. This estimated parameter value 82 is then passed to the buffer store 62 instead of the measured parameter value. This ensures that the buffer 62 comprises only normal parameter values so that subsequent calculated thresholds 66 are not premised on abnormal parameter values.

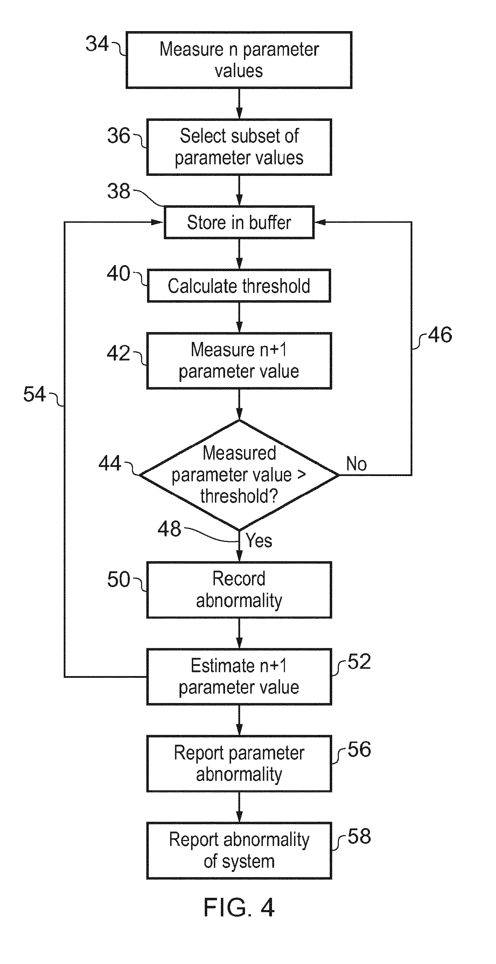

The method according to the present invention is described with respect to Figure 4. To initialise the method a parameter of the system is measured by the sensor 60 and recorded a number n of times, for example ten to twenty times. This is the first step 34 in Figure 4.

A subset of these parameter values is then selected at the step 36. The subset is stored in the buffer store 62 at the step 38. When the method is initialised the subset may comprise all the measured parameter values. Subsequently there will be more measured parameter values than can be held in the buffer 62, as will be described, so that a subset is required. The subset may be any requisite number of available parameter values. Advantageously the subset will be the most recent parameter values, for example the last ten parameter values that have been measured.

In step 40 of the method the processor 64 is used to calculate a threshold 66 that corresponds to the boundary between normal and abnormal values of the parameter. The threshold 66 is calculated by applying Bayesian extreme value theory to the subset of parameter values stored in the buffer 62. Bayesian extreme value theory builds an extreme value distribution using few data points, as is well understood. Ordinarily there is an upper threshold and a lower threshold, which bound the range of normal values for the measured parameter. The thresholds 66 can be set in terms of a multiple of the standard deviation away from the mean value. The upper and lower thresholds may be the same multiple of the standard deviation or different multiples. Generating such thresholds 66 using Bayesian extreme value theory is taught in US7925470 which is incorporated herein by reference.

For some parameters, significant deviation from the mean in one direction is non-detrimental. Thus it may be beneficial to space this threshold further from the mean than the other threshold. For example, where the parameter is a clearance between two components, such as a rotor and its casing, the threshold relating to minimum clearance may be closer to the mean of the parameter values than the threshold relating to the maximum clearance because if the minimum clearance is exceeded the rotor blade tips may rub against the casing thereby permanently changing the spacing between them, whereas if the maximum clearance is exceeded the effect is primarily on efficiency and is reversible.

In step 42 the next value of the parameter is measured and recorded. The measured parameter value is compared to the threshold 66, step 44, in the comparator 68. If the measured parameter value does not exceed the threshold 66, the measurement is added to the buffer 62 on iteration branch 46. Where the buffer 62 is full, that is there is a parameter value in each available slot, a previous parameter value is removed from the buffer 62 and the measurement is added into the buffer 62 instead. For example, where the parameter is measured as a time series, the oldest parameter value in the buffer 62 may be removed and the measurement taken at step 42 be added to the buffer 62 instead. However, an alternative selection of a parameter value to remove in favour of the latest measurement can be used where appropriate, for example where the measurements are received into the buffer 62 in a different order to that in which they were recorded. The method then repeats from step 40 using the new contents of the buffer 62.

If the measured parameter value exceeds the threshold 66 the branch 48 is followed. The measurement is deemed to be a parameter abnormality and is recorded as such by the recorder 76 at step 50.

The next (n+1) parameter value is estimated at step 52 using the estimator 80. The estimated parameter value 82 is calculated by applying a Kalman filter to the system state of the current parameter values in the buffer store 62. For example the mean and standard deviation of the parameter values in the buffer 62 are multiplied by a multiplier to give an iteration loop update, for example a time step update, of the mean and standard deviation. The multiplier may be a constant multiplier. Alternatively the multiplier may be functionally dependent on one or more previous system states. Thus the multiplier may be configured to follow the trend of previous mean values. Optionally the Kalman filter may also add a noise element. The noise element may be added after the multiplier is applied.

In one preferred embodiment of the Kalman filter the mean and standard deviation of the current parameter values in the buffer 62 are expressed as a matrix and the multiplier is a state transition matrix. Application of a Kalman filter is taught in EP0315307 which is incorporated herein by reference. Alternative methods to apply a Kalman filter to the parameter values in the buffer 62 will be apparent to the skilled reader.

The estimated parameter value 82 is then added to the buffer store 62 via feedback loop 54. As discussed above, if the buffer 62 is already full the estimated parameter value 82 displaces a parameter value already in the buffer 62. For example the oldest parameter value in the buffer 62 may be removed and the estimated parameter value 82 added into the buffer 62 instead. Advantageously, adding the estimated parameter value 82 to the buffer 62 instead of the measured parameter value, where the measured parameter value exceeds the calculated threshold 66, results in all parameter values in the buffer 62 being within the 'normal' parameter value range so that subsequently calculated thresholds 66 remain appropriate. The method then repeats from step 40 using the new contents of the buffer 62.

Optionally, at step 56 the recorded parameter abnormality is reported. Alternatively, the step 56 may not report each parameter abnormality but may report once a predetermined number of parameter abnormalities have been recorded at step 50. For example, reporting at step 56 may occur when three consecutive parameter abnormalities have been recorded at step 50. Alternatively reporting at step 56 may occur when three parameter abnormalities have been recorded at step 50 within the previous five iterations of the method. Advantageously, reporting parameter abnormalities only when more than one has occurred within a predetermined iteration constraint reduces the incidence of false reporting whilst not delaying the reporting significantly. Reporting preferably occurs in parallel to a subsequent iteration of the method.

The parameter abnormality may be reported at step 56 with a confidence level or indication of risk. The confidence level may relate to the probability that the reported parameter abnormality is incorrect. The confidence level may increase where more consecutive parameter abnormalities have been reported at step 50. The indication of risk may relate to the risk associated with not taking action on the basis of the reported parameter abnormality.

The reporting step 56 may take the form of providing an alert to the system operator. For example, to the engine manufacturer, the engine operator or the pilot of an aircraft powered by the engine 10. The alert may also include recommended further actions, such as inspection or testing of components or the system, cleaning of components or the system, performing maintenance actions on components or the system, repairing components or the system, replacing components of the system, or removing the system from service.

A further optional step 58 comprises reporting an abnormality of the system. Where a system abnormality is directly correlated with an abnormality of a single parameter, such as turbine gas temperature, this reporting step 58 may occur with or immediately after the step 56 of reporting the parameter abnormality. Other system abnormalities, such as turbine wear or failure, compressor failure or similar, may be dependent on abnormalities in more than one parameter. In this case the method can be performed, in series or parallel, for two or more parameters of the system. The reporting step 58 can then be triggered by recorded parameter abnormalities in each relevant parameter. The system abnormalities may be reported at step 58 with a confidence level or indication of risk. The confidence level may relate to the probability that the reported system abnormality is correct. The confidence level may increase where more consecutive parameter abnormalities have been reported. The indication of risk may relate to the risk associated with not taking action on the basis of the reported system abnormality.

There may be a further optional step to modify the system in response to the reported parameter abnormality or system abnormality. Such modification may be automatic, such as applying a trim to the parameter to return measured parameters to within the bounds of normal values, or may be manual, such as inspection, testing, or maintenance activities.

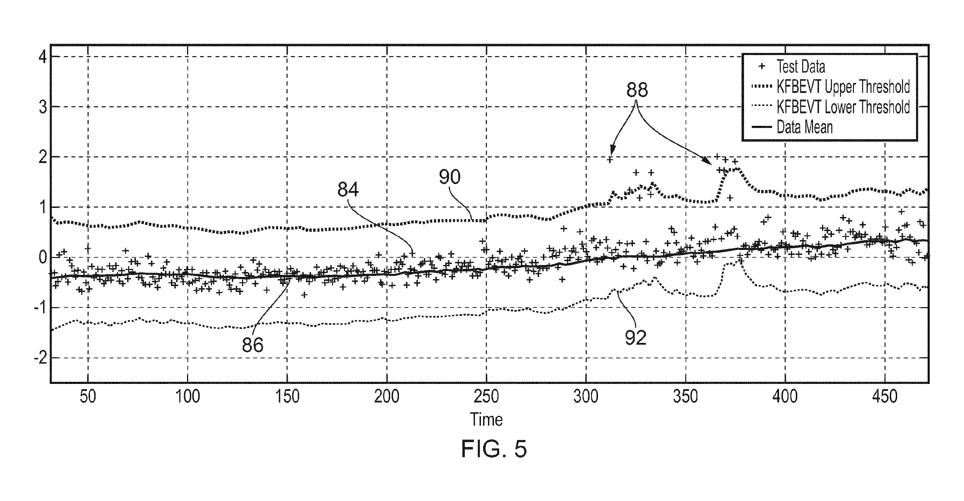

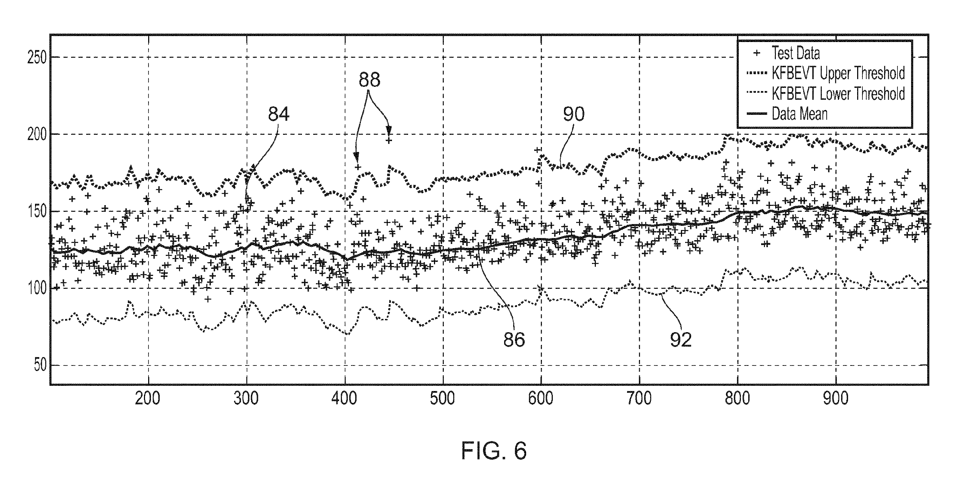

Figure 5 and Figure 6 show the parameter values measured in successive measurement steps over time. The y-axis is the magnitude of the measurements with an exemplary scale showing the change in the parameter value. For example, the y-axis may be delta turbine gas temperature, that is the change in turbine gas temperature. The parameter values are plotted as points 84. The mean value of the parameter values in the buffer 62 is plotted as line 86. As is apparent, the mean line 86 varies comparatively slowly over time even when there are significantly abnormal parameter values, such as those indicated at 88.

The upper threshold 90 and lower threshold 92 are plotted a defined multiple of the standard deviation away from the mean 86. In both Figure 5 and Figure 6 the upper threshold 90 is the same multiple of standard deviation away from the mean as the lower threshold 92. In other examples the upper threshold 90 and lower threshold 92 will be different distances away from the mean, because they will be calculated as different multiples of the standard deviation from the mean line 86.

The upper threshold 90 and lower threshold 92 track the underlying trend of the parameter values 84 but still effectively differentiate between normal and abnormal 88 parameter values. Thus where there are clusters of abnormal parameter values 88, either consecutive or in close proximity with one or two normal parameter values between pairs of abnormal parameter values 88, these are correctly identified as parameter abnormalities by the monitor and method of the present invention. This can be contrasted to the prior art plot in Figure 1 where only the first of a cluster of large parameter values is identified as an abnormality because the thresholds incorporate that value and thus exceed subsequent parameter values of similar magnitude.

Although the system to be monitored by the present invention has been described as a gas turbine engine 10 the present invention is applicable to many other systems. The system may be an internal combustion engine, a steam turbine, a wind turbine or a tidal turbine. The measured parameter for such engines may be a shaft speed, blade tip speed, clearance, vibration, fluid temperature, pressure, power output or displacement. The system abnormality may be overspeed or underspeed of a rotating part of the engine, system overheat or inadequate power output.

The system may be a machine, such as a manufacturing machine, lathe, turning machine, drill, material deposition machine or welding machine. The measured parameter for such machines may be a shaft speed, vibration, pressure, displacement, temperature of a component being worked or of the system components, layer thickness or weld integrity. The system abnormality may be misalignment of parts of the machine, insufficient pressure or speed to achieve the manufacturing task or blocked material deposition nozzles.

The monitored system may be a network of pieces of equipment. For example, it may be a power plant comprising a gas turbine engine 10, pumps, tanks, filters, controllers and interconnecting pipework. In this case the measured parameter may include flow rates, flow pressures, fluid temperatures, and pump output power. The system abnormalities may include flow reduction, filtration reduction or overheating.

The system monitored by the present invention may alternatively be a weather system. In this case the measured parameter may be air temperature, air pressure, rainfall, wind speed, or water levels in rivers or lakes. The system abnormalities may include floods, droughts and hurricanes.

The measured values of the parameter may be processed before being passed to the processor 64 or before the step of storing the values in the buffer 62, step 38. For example, the measured values may be normalised or corrected for thermal effects.

The threshold 66 may alternatively be calculated as an offset from the estimate of the state. For example the threshold 66 may be set at three times the standard deviation, referred to as three sigma (3σ), from the state estimate.

The estimator 80 has been described as applying a Kalman filter to estimate the parameter value because this is mathematically optimal. However, it may alternatively be a running average or other data smoothing method.

The monitor and method of the present invention is preferably encompassed in computer-implemented code and stored on a computer-readable medium. It is thus a computer-implemented monitor and a computer-implemented method to identify an abnormality in a system. The method may be implemented on a basic computer system comprising a processing unit, memory, user interface means such as a keyboard and/or mouse, and display means. The method may be performed 'offline' on data which has been measured and recorded previously. Alternatively it may be performed in 'real-time', that is at the same time that the data is measured. In this case the computer may be coupled to the system. Where the system is or forms part of a gas turbine engine 10 the computer may be an electronic engine controller or another on-board processor. Where the gas turbine engine 10 powers an aircraft, the computer may be an engine controller, a processor on-board the engine 10 or a processor on-board the aircraft.

## Claims

1. A monitor to identify an abnormality in a system (10), the monitor comprising:
a) a sensor (60) to measure a parameter value (84) of the system (10);
b) a buffer store (62);
c) a processor (64) to receive parameter values (84) from the sensor (60); select a subset of the parameter values (84) to store in the buffer store (62); and calculate a threshold (66) corresponding to normal values of the parameter;
d) an estimator (80) to estimate the next parameter value (84) of the system (10);
e) a comparator (68) to compare a measured parameter value (84) to the calculated threshold (66) and to store the measured parameter value (84) in the buffer store (62) if the measured parameter value (84) does not exceed the calculated threshold (66) and to store the estimated parameter value (82) in the buffer store (62) if the measured parameter value (84) exceeds the calculated threshold (66); and
f) a recorder (76) to record a parameter abnormality (88) if the measured parameter value (84) exceeds the calculated threshold (66).

2. A monitor as claimed in claim 1 wherein the processor (64) calculates the threshold (66) by applying Bayesian extreme value theory to the parameter values (84) stored in the buffer store (62); and/or wherein the estimator (80) estimates the next parameter value (84) by applying a Kalman filter to a system state at the previous parameter value (84).

3. A method to identify an abnormality in a system (10), the method comprising iterating steps to:
a) periodically measure (34) a parameter (84) of the system (10) to form a data series of parameter values (84);
b) select a subset (36) of the parameter values (84) from the data series to store in a buffer (62) of parameter values (84);
c) calculate (40) a threshold (66) corresponding to normal values (84) of the parameter;
d) measure the next value (42) of the parameter;
e) compare (44) the measured parameter value (84) to the calculated threshold (66) and
i) if the measured parameter value (84) does not exceed the calculated threshold (66), store the measured parameter value (84) in the buffer (62) for subsequent iterations (46); or
ii) if the measured parameter value (84) exceeds the calculated threshold (66), record as a parameter abnormality (50), estimate (52) the next parameter value (84) in the data series, and store (54) the estimated parameter value (82) in the buffer (62) for subsequent iterations (46).

4. A method as claimed in claim 3 wherein step 3.b) comprises selecting consecutive parameter values (84) from the data series.

5. A method as claimed in claim 3 or 4 wherein step 3.c) comprises applying Bayesian extreme value theory to the parameter values (84) in the buffer (62);
and wherein the Kalman filter comprises applying a constant multiplier to the system state; applying a multiplier to the system state that is a function of at least one previous system state; or comprises a noise component to accommodate random fluctuation in the parameter values (84).

6. A method as claimed in any of claims 3 to 5 wherein step 3.e)ii) comprises applying a Kalman filter to a system state at the previous parameter value (84).

7. A method as claimed in any of claims 3 to 6 comprising a further step to report (58) an abnormality of the system (10) after three parameter abnormalities (88) have been recorded (50) at step 3.e)ii).

8. A method as claimed in any of claims 3 to 7 wherein the system comprises an engine (10) or a gas turbine engine (10).

9. A method as claimed in claim 8 wherein the parameter comprises one of the group comprising a component temperature; air temperature; oil temperature; a pressure; a shaft speed; vibration; clearance between components.

10. A method as claimed in claim 8 wherein the abnormality of the system comprises one or more of the group comprising overspeed of a rotating part of the engine; underspeed of a rotating part of the engine; system overheat; inadequate power output; failure of a rotating part of the engine.

11. A method as claimed in any of claims 3 to 10 wherein the system (10) comprises a weather system and wherein the parameter comprises one of the group comprising air temperature; rainfall; wind speed; pressure; air flow.

12. A method as claimed in any of claims 3 to 11 wherein step 3.a) comprises periodically measuring (34) more than one parameter of the system (10) and the steps of the method are performed for each parameter; and the method further comprising a step to report (58) an abnormality of the system (10) if a parameter abnormality (88) is recorded (50) for each parameter at step 3.e)ii).

13. A method as claimed in any of claims 3 to 12 further comprising a step to modify the system (10) in response to a recorded parameter abnormality (88) or in response to a reported abnormality in the system; and wherein the step of modifying the system (10) comprises one or more of the group comprising: inspecting a component of the system; testing a component of the system; cleaning a component of the system; performing maintenance actions on a component of the system; repairing a component of the system; replacing a component of the system; inspecting the system; testing the system; cleaning the system; performing maintenance actions on the system; repairing the system; removing the system from service.

14. A system health monitor configured to perform the steps of the method according to any of claims 3 to 13.

15. A computer program having instructions adapted to carry out the method according to any of claims 3 to 13; or a computer readable medium, having the computer program recorded thereon
